# EUROPÄISCHE PATENTANMELDUNG

(11) **EP 1 993 062 A2**
(43) Veröffentlichungstag der Anmeldung: **19.11.2008**
(21) Anmeldenummer: 08103542.0
(22) Anmeldetag: 15.04.2008
(51) Int. Cl.: G06K 9/00

(54) **Verfahren und biometrisches System zum Erkennen von Latenzabdrücken**

(30) Priorität: 15.05.2007 DE 102007022636
(71) Anmelder: Siemens Aktiengesellschaft Österreich, 1210 Wien (AT)
(72) Erfinder: Birchbauer, Josef Alois, 8054 Seiersberg (AT); Neuwersch, Michael, 8042 Graz (AT)
(74) Vertreter: Maier, Daniel Oliver

(57) **Zusammenfassung**

Die Erfindung betrifft ein Verfahren zum Erkennen von Latenzabdrücken in einem biometrischen System (BIO_SYS), bei welchem ein Benutzer zumindest einen Finger in Kontakt mit einer Sensoreinheit (SE) bringt (1) und welches zumindest eine Sensoreinheit (SE) sowie davon räumlich getrennte Mittel zum Durchführen eines Identifikationsvorganges (ZR) umfasst. Dabei wird vor dem eigentlichen Identifikationsvorgang in einem Vorverarbeitungsschritt ein von der Sensoreinheit (SE) aktuell erfasstes Bild eines Fingerabdruckes mit einem jeweils letztgültigen und in einer Speichereinheit (SPE) der Sensoreinheit (SE) gespeicherten Bild eines Fingerabdruckes von einer Auswerteeinheit (AE) der Sensoreinheit (SE) verglichen (2). Dann werden bei einem vorgegebenen Grad an Übereinstimmung der beiden Bilder Rückweisungsmaßnahmen veranlasst (3). Der vollständige Identifikationsvorgang wird nur dann durchgeführt (4), wenn dieser vorgegebene Grad an Übereinstimmung unterschritten wird.

Weiters betrifft die Erfindung auch ein biometrisches System (BIO_SYS), welches für eine Durchführung des Verfahrens geeignete Einrichtungen und Einheiten (ZR, SE) umfasst.

## Beschreibung

### Technisches Gebiet

Die Erfindung betrifft ein Verfahren zum Erkennen von Latenzabdrücken in einem biometrischen System, bei welchem ein Benutzer für eine Eingabe zumindest einen Finger in Kontakt mit einer Sensoreinheit bringt, um einen Fingerabdruck einzugeben. Die Erfindung betrifft weiters ein biometrisches System zur Durchführung des erfindungsgemäßen Verfahrens, wobei das biometrische System zumindest eine Sensoreinheit zum Eingeben von Fingerabdrücken und davon räumlich getrennte Mittel zum Durchführen eines Identifikationsvorganges umfasst.

### Stand der Technik

Systeme, welche zur Identifizierung und Erkennung von Personen biometrische Charakteristika wie z.B. Körpergröße, Fingerabdrücke, Iris, Gesichtsgeometrie, etc. verwenden, haben in den letzten Jahren einen enormen Aufschwung erlebt. Diese Systeme werden auch als biometrische Systeme bezeichnet.

Insbesondere die Identifizierung und Verifikation von Fingerabdrücken auf elektronischer Basis hat neben der bekannten Bedeutung in der Kriminalistik auch auf vielen anderen Gebieten erhebliche Bedeutung gewonnen, so z.B. bei Zutritts kontrollen zu Gebäuden oder Räumen, bei einer Berechtigungskontrolle für Computersystemen, für eine Benutzung von Computeranwendungen, bei Telekommunikationsgeräten oder bei Kreditkarten- und Geldausgabeautomaten, etc.

Zur Eingabe des Fingerabdruckes in das jeweilige biometrische System dient üblicherweise eine Sensoreinheit - ein so genannter Fingerabdrucksensor (z.B. Ultraschallsensor, optische oder kapazitive Sensor, etc.). Mit diesem Sensor wird die Fingeroberfläche, genauer gesagt eine oder mehrere Fingerkuppen, abgetastet. Aus der erhaltenen Information werden für die Fingerabdruckerkennung - für einen so genannten Identifikationsvorgang - wichtige Merkmale extrahiert. Dabei handelt es sich insbesondere um Merkmale der Papillarlinien, wie beispielsweise Endpunkte, Verzweigungen, Inseln und andere singuläre Merkmale, welche insgesamt als Minutien bezeichnet werden.

Für die laufende und übliche Benutzung eines biometrischen Systems ist es erforderlich, dass dem biometrischen System ein so genannter Referenzfingerabdruck bzw. ein Bild eines Referenzfingerabdruckes bekannt ist. Dieses Bild wird während des Identifikationsvorganges vom biometrischen System zum Erkennen des jeweiligen Benutzers verwendet. Dabei wird die aktuelle Fingerabdruckeingabe des jeweiligen Benutzers mit dem Bild des Referenzfingerabdruckes, welche dem biometrischen System bekannt ist, verglichen.

Der Identifikationsvorgang umfasst dabei nicht nur die Identifikation des Benutzers (d.h. ein eindeutiges Erkennen des Benutzers), sondern auch eine Identitätsfeststellung und eine Verifikation (d.h. eine Abgleich von hinterlegten biometrischen Daten mit den eingegebenen biometrischen Daten). Der Identifikationsvorgang vom biometrischen System ist somit ein gesamter Erkennungsvorgang.

Dafür verfügen biometrische Systeme häufig über ein Archiv von Fingerabdrücken verschiedener Benutzer bzw. auch von mehr als einem Finger eines einzelnen Benutzers. Diese Referenzfingerabdrücke bzw. die Bilder davon können dem biometrischen System beispielsweise in elektronischer Form zur Verfügung gestellt werden. Bei vielen biometrischen Systemen werden beispielsweise zuerst von einem neuen Benutzer einer oder mehrere noch nicht bekannt gewesene Fingerabdrücke eingegeben und diese dann z.B. gemeinsam mit einem Benutzernamen, Code, etc. im biometrischen System gespeichert. Diese Speicherung erfolgt häufig zentral - beispielweise in einem zentralen Rechner oder Server des biometrischen Systems, welcher insbesondere auch zur Durchführung des Identifikationsvorganges eingerichtet sein kann.

Der Vorgang der Eingabe von noch im biometrischen System unbekannten Fingerabdrücken wird als Enrollment bezeichnet, im Gegensatz zum sogenannten Matching, welches beim Identifikationsvorgang durchgeführt wird und bei welchem z.B. zu Identifikation ein Vergleich zwischen einem aktuell eingegebenen Fingerabdruck und einem im biometrischen System - üblicherweise zentral - gespeicherten Fingerabdruck erfolgt.

Eine Identifikation von Benutzern mit Hilfe von Fingerabdrücken, gegebenenfalls kombiniert mit einer zusätzlichen Eingabe eines Codes oder eines Passwortes, etc. bietet aufgrund der Einmaligkeit eines Fingerabdruckes eine relativ hohe Sicherheit. Dazu ist allerdings anzumerken, dass diese Sicherheit von der Art der Merkmalsextraktion aus dem Bild des Fingerabdruckes abhängt. Je genauer diese Extraktion erfolgt, umso mehr Merkmale stehen zur Erhöhung der Sicherheit zur Verfügung.

Weiters spielen für die Sicherheit eines biometrischen Systems - insbesondere bei Einsatz kapazitiver Sensoren - so genannte Latenzabdrücke eine wesentliche Rolle. So genannte Latenzabdrücke werden als Spuren von Fingerabdrücken zeitpunktunabhängig hinterlassen, sobald insbesondere glatte Oberflächen mit den Fingern berührt werden. Dadurch können z.B. durch so genannte Hauchattacken, bei relativ hoher Luftfeuchtigkeit oder auch durch aus der Kriminalistik bekannte Verfahren Fingerabdrücke unmittelbar am Sensor reaktiviert und mit diesen ein Überwindungsversuch der Fingerabdruckerkennung gestartet werden.

Insbesondere beim Einsatz der Fingerabdruckerkennung bei transportablen Endgeräten (z.B. Mobiltelefon, Laptops, Computer-Mäusen, etc.), welche üblicherweise einem Benutzer zugeordnet sind und Zugang zu beispielsweise Anwendungen und/oder Firmennetzen bitten, können so genannte Hauchattacken bzw. Latenzabdrücke - insbesondere beim Einsatz kapazitiver Sensoren - ein Sicherheitsrisiko darstellen.

Eine einfache Möglichkeit zur Abwehr von so genannten Hauchattacken stellt ein Vergleich mit dem zuletzt gültig eingegebenen Fingerabdruck dar. Dieser Vergleich erfolgt bei Fingerabdruckerkennung z.B. für Personal Computers (PCs) üblicherweise auf dem PC, wobei beispielsweise die Eingabe des Fingerabdruckes über eine an den PC angeschlossene oder in den PC integrierte Sensoreinheit erfolgt, oder z.B. bei größeren System (z.B. Zutrittskontrollen, Firmennetzzugänge, etc.) auf einem zentralen Rechner.

Daraus ergibt sich allerdings der Nachteil, dass ein Fingerabdruckesmuster nur dann als zuletzt gültiger Fingerabdruck erfasst wird, wenn von der Sensoreinheit beim Berühren der Sensoreinheit gelesen wird. Wird von der Sensoreinheit gerade nicht gelesen, so wird der Fingerabdruck nicht erfasst und es besteht keine Information über den zuletzt präsentierten Fingerabdruck.

Eine mögliche Lösung wäre ein ständiges Abfragen der Sensoreinheit durch das zentrale System (z.B. PC, zentraler Rechner, etc.), auf dem der jeweils aktuelle und zuletzt gültige Fingerabdruck für den Vergleich hinterlegt ist. Dies führt aber zu einer ständigen Übertragung von Daten und damit zu einer hohen Datenrate bzw. einem hohen Datenverkehr zwischen der Einheit mit Sensoreinheit (z.B. Computer-Maus, etc.) und zentralem Rechner bzw. PC des biometrischen Systems. Das biometrische System wird dadurch beispielsweise in seiner Lesegeschwindigkeit beeinträchtigt und/oder weist signifikante Einschränkungen im Bedienungskomfort auf (z.B. kein gleichzeitige Nutzung als Computer-Maus der Sensoreinheit, etc.).

Eine weitere Möglichkeit zur Abwehr von so genannten Hauchattacken bzw. Latenzabdrücke bieten Mechanismen, bei welchem ein mehrmaliges Auflegen desselben Fingers (z.B. mit einem gewissen Versatz) bzw. einer Fingersequenz erforderlich ist, oder von welchen eine Auswahl aus einem Pool eingelernter und im biometrischen System zentral gespeicherter Fingerabdrücke getroffen werden. Bei diesen Mechanismen erweist sich allerdings als nachteilig, dass zum Teil ein Mehraufwand von Benutzer und/oder eine wesentlich komplizierte Benutzerschnittstelle als bei biometrischen System mit einfacher Eingabe von Fingerabdrücken notwendig sind.

Eine weitere Möglichkeit zur Abwehr von Hauchattacken bzw. Latenzabdrücke stellen so genannte Ziehsensoren dar. Diese Sensoren erfordern jedoch eine Lernphase des Benutzers, bis dieser eine geforderte Ziehbewegung für die Eingabe des Fingerabdruckes beherrscht und erfordern vom Benutzer eine kompliziertere Handhabung (z.B. nicht nur bloße Berührung eines flächigen Sensors).

### Darstellung der Erfindung

Der Erfindung liegt daher die Aufgabe zugrunde, auf einfache, benutzerfreundliche und kostengünstige Weise Latenzabddrücke zu erkennen und damit die Sicherheit von biometrischen Systemen zu erhöhen.

Erfindungsgemäß erfolgt die Lösung dieser Aufgabe durch ein Verfahren zum Erkennen von Latenzabdrücken in einem biometrischen System, bei welchem ein Benutzer für eine Eingabe zumindest einen Finger in Kontakt mit einer Sensoreinheit bringt. Dabei wird zuerst in einem Vorverarbeitungsschritt vor einem Identifikationsvorgang von der Sensoreinheit ein aktuell erfasstes Bild eines Fingerabdruckes mit einem jeweils letztgültigen und in der Sensoreinheit gespeicherten Bild eines Fingerabdruckes verglichen und es werden bei einem vorgegebenen Grad an Übereinstimmung der beiden Bilder Rückweisungsmaßnahmen veranlasst. Der vollständige Identifikationsvorgang wird nur dann durchgeführt, wenn dieser vorgegebene Grad an Übereinstimmung unterschritten wird.

Der Hauptaspekt des erfindungsgemäßen Verfahrens besteht darin, dass in einem Vorverarbeitungsschritt vor dem eigentlichen Identifikationsvorgang von einer Sensoreinheit - sobald diese mit einer Versorgungsquelle (z.B. Stromquelle, Batterie) verbunden ist - jede Berührung (d.h. jeder Fingerabdruck) registriert und diese dann mit einem jeweils letztgültigen und in der Sensoreinheit gespeicherten Bild eines Fingerabdruckes verglichen wird. Es entsteht dadurch keine Belastung durch eine Übertragung von jedem aufgenommen Bild an den zentralen Rechner bzw. durch ständiges Abfragen der Sensoreinheit durch den zentralen Rechner. Außerdem bleibt die Benutzung des biometrischen Systems für den Benutzer einfach und die Latenzabdrücke werden auf kostengünstige Weise bereits von der Sensoreinheit erkannt, welche üblicherweise vom z.B. zentralen Rechner räumlich getrennt ist.

Es ist günstig, wenn als Rückweisungsmaßnahme kein Bild für den Identifikationsvorgang weitergeleitet wird, da auf diese einfache Weise dem biometrische System bzw. Mitteln zum Durchführen des eigentlichen Identifikationsvorganges (z.B. einem zentralen Rechner, PC, etc.) ohne zusätzlichen Datenverkehr mitgeteilt wird, dass ein Latenzabdruck vorliegt.

Es ist auch vorteilhaft, wenn als Rückweisungsmaßnahme ein vordefiniertes Bild für den Identifikationsvorgang weitergeleitet wird, da auf diese Weise ohne großen Aufwand auf das Vorliegen eines Latenzabdruckes hingewiesen werden kann.

Bei einer zweckmäßigen Weiterbildung des erfindungsgemäßen Verfahren ist vorgesehen, dass nach Feststellen einer Unterschreitung des vorgegebenen Grades an Übereinstimmung zwischen dem aktuell erfasstes Bild des Fingerabdruckes und dem jeweils letztgültigen und in der Sensoreinheit gespeicherten Bild des Fingerabdruckes für eine vordefinierte Zeitdauer anforderungssynchron alle von der Sensoreinheit aufgenommenen Bilder von Fingerabdrücken weitergeleitet werden. Dadurch wird auf einfache Weise sichergestellt, dass beispielsweise ruhig von der Sensoreinheit liegender Finger eines Benutzers nicht als Latenzabdruck gewertet wird.

Bei einer bevorzugten Fortbildung der Erfindung wird nach Feststellen einer Unterschreitung des vorgegebenen Grades an Übereinstimmung zwischen dem aktuell erfasstes Bild des Fingerabdruckes und dem jeweils letztgültigen und in der Sensoreinheit gespeicherten Bild des Fingerabdruckes erst dann wieder der Vorverarbeitungsschritt vor einem Identifikationsvorgang von der Sensoreinheit durchgeführt, wenn einen so genannte Lücke von der Sensoreinheit detektiert worden ist. Dabei kann auf vorteilhafte Weise ein Ansprechen der Latenzabdruckerkennung unterdrückt werden. Denn die Latenzabdruckerkennung im Vorverarbeitungsschritt nach einem Fingerabdruck ausreichender Qualität wird erst aktiv, wenn ein Abheben des Fingers (d.h. "kein Finger auf der Sensoreinheit") und damit ein Leerbild nach Vorhandensein eines Fingerabdrucks detektiert wird. Für dieses Unterdrücken der Latenzabdruckerkennung kann für die Speicherung vergangener Bilder von Fingerabdrücken ein so genannter Ringbufferspeicher eingesetzt werden.

Es ist auch günstig, wenn das aktuell erfasste Bild eines Fingerabdruckes mit dem jeweils letztgültigen und in der Sensoreinheit gespeicherten Bild des Fingerabdruckes von der Sensoreinheit auf Bildbasis verglichen wird, da so auf einfache Weise ein Latenzabdruck erkannt werden kann, wenn die beiden Bilder annähernd ident sind.

Alternativ empfiehlt auch sich, dass das aktuell erfasste Bild eines Fingerabdruckes mit dem jeweils letztgültigen und in der Sensoreinheit gespeicherten Bild des Fingerabdruckes von der Sensoreinheit auf Merkmalsbasis verglichen wird. Dabei werden die Merkmale der Fingerabdruck-Bilder verglichen und ein Latenzabdruck erkannt, wenn eine Mehrzahl der Merkmale der beiden Bilder ident sind.

Die Lösung der Aufgabe erfolgt weiters durch ein biometrisches System der eingangs erwähnten Art, welches zur Durchführung des erfindungsgemäßen Verfahrens geeignet ist, wobei dieses System zumindest eine Sensoreinheit zum Eingeben von Fingerabdrücken und davon räumlich getrennte Mittel zum Durchführen eines Identifikationsvorganges umfasst und die Sensoreinheit zumindest aus eine Speichereinheit zum Abspeichern des jeweils letztgültigen Bildes eines Fingerabdruckes und eine Auswerteeinheit zum Vergleichen des aktuell erfassten Bildes des Fingerabdruckes mit dem jeweils letztgültigen und gespeicherten Bild des Fingerabdruckes im Vorverarbeitungsschritt besteht.

Die mit diesem biometrischen System erzielbaren Vorteile bestehen insbesondere darin, dass die Sensoreinheit des biometrischen Systems über eine Speichereinheit zum Abspeichern des jeweils letztgültigen Fingerabdruck-Bildes sowie über eine Auswerteeinheit zur Durchführung des Vorverarbeitungsschrittes zur Erkennung eine Latenzabdrucks. Auf diese Weise ist es nicht notwendig, die Sensoreinheit laufend nach einem aufliegenden Finger abzufragen (z.B: "Polling"). Der Datenverkehr zwischen Sensoreinheit und zentraler Einheit des biometrischen Systems wird damit gering gehalten.

Eine bevorzugte Ausgestaltung des erfindungsgemäßen biometrischen Systems sieht vor, dass die Speichereinheit als nicht-flüchtiger Speicher ausgeführt ist. Dadurch geht ein in der Sensoreinheit gespeichertes Bild eines Fingerabdruckes nicht verloren, wenn beispielsweise eine mobile Einheit (z.B. Computer-Maus, Mobiltelefon, etc.), welche die Sensoreinheit umfasst, zu einem anderen Arbeitsplatz für eine Fingerabdruckserkennung transportiert wird und damit für eine bestimmte Zeitdauer ohne Stromversorgung ist.

### Kurzbeschreibung der Zeichnung

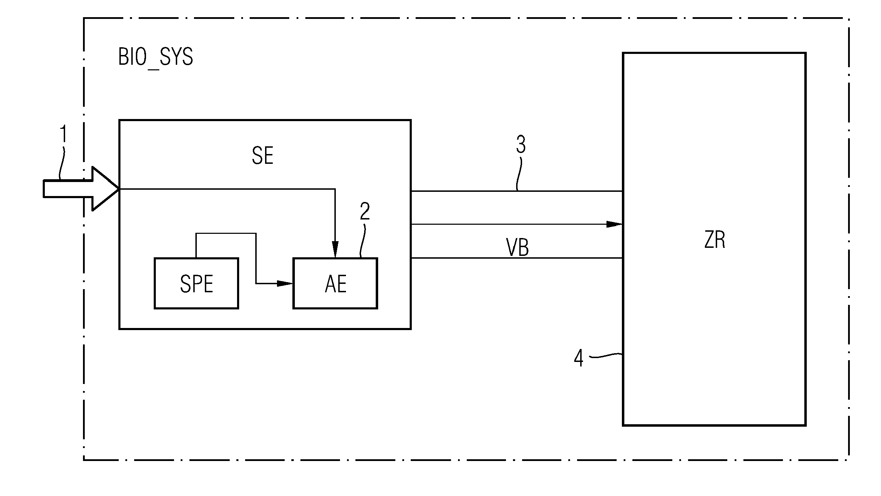

Die Erfindung wird nachfolgend in beispielhafter Weise anhand einer beigefügten Figur erläutert. Figur 1 zeigt schematisch in beispielhafter Weise das erfindungsgemäße Verfahren sowie das erfindungsgemäße biometrische System zur Erkennung von Latenzabdrücken.

### Ausführung der Erfindung

Figur 1 zeigt in schematischer Weise das erfindungsgemäße biometrische System BIO SYS, welches zumindest eine Sensoreinheit SE, welche beispielsweise in eine Computer-Maus, etc. integriert sein kann, und Mittel zum Durchführen eines Identifikationsvorganges ZR, wie beispielsweise einen zentralen Rechner oder eine Personal Computer, umfasst. Die Mittel zum Durchführen des Identifikationsvorganges ZR umfassen üblicherweise auch einen Speicher oder Archive, in welchen so genannte Reverenzfingerabdrücke von zur Nutzung einer Anwendung, eines Netze, etc. berechtigter Benutzer für den Identifikationsvorgang hinterlegt sind.

Die Mittel zum Durchführen des Identifikationsvorganges ZR sind dabei räumlich von der Sensoreinheit SE getrennt. Es besteht aber zwischen der Sensoreinheit SE und den Mittel zum Durchführen des Identifikationsvorganges ZR eine Verbindung VB, welche zur Übertragung von Daten (z.B. Aufnahme eines Fingerabdruckes) zwischen der Sensoreinheit SE und den Mittel zum Durchführen des Identifikationsvorganges ZR dient und z.B. als Kabel oder Funkverbindung, etc. ausgeführt sein kann.

Die Sensoreinheit SE weist zumindest eine Speichereinheit SPE und eine Auswerteeinheit AE auf. Die Speichereinheit SPE wird zum Abspeichern eines jeweils letztgültigen Bildes eines Fingerabdruckes eingesetzt. Von der Auswerteeinheit AE wird ein Vergleich zwischen einem aktuell erfassten Bild eines Fingerabdruckes mit dem jeweils in der Speichereinheit SPE gespeicherten letztgültigen Bild eines Fingerabdruckes durchgeführt.

Figur 1 zeigt weiters den schematischen Ablauf des erfindungsgemäßen Verfahrens zum Erkennen von Latenzabdrücken. Dabei wird in einem ersten Verfahrensschritt 1 von der Sensoreinheit (SE) ein Fingerabdruck aufgenommen bzw. festgestellt, da z.B. von einem Benutzer zumindest ein Finger mit der Sensoreinheit (SE) in Kontakt gebracht worden ist oder da z.B. ein Latenzabdruck beispielsweise durch eine Hauchattacke oder durch hohe Luftfeuchtigkeit am Sensor reaktiviert wurde.

Dieser aufgenommene Fingerabdruck wird dann in einem zweiten Verfahrensschritt 2 an die Auswerteeinheit AE der Sensoreinheit SE übermittelt. Aus der Speichereinheit SPE wird ebenfalls im zweiten Verfahrensschritt 2 ein abgespeichertes Bild des zuletzt gültig eingegebenen Fingerabdruckes an die Auswerteeinheit AE übermittelt. Von der Auswerteeinheit AE werden dann die beiden Bilder - das aktuell erfasste Bild des Fingerabdruckes und das jeweils letztgültige und in der Speichereinheit SPE gespeicherte Bild - eines Fingerabdruckes miteinander verglichen. Der Vergleich kann auf Bildbasis oder auf Merkmalbasis durchgeführt werden.

Wird von der Auswerteeinheit AE festgestellt, dass ein vorgegebener Grad an Übereinstimmung der beiden Bilder überschritten worden ist, so werden in einem dritten Verfahrensschritt 3 Rückweisungsmaßnahmen veranlasst. Es wird beispielsweise kein Bild oder ein vordefiniertes Bild über die Verbindung VB an die Mittel zum Durchführen des Identifikationsvorganges ZR weitergeleitet. Von den Mittel zum Durchführen des Identifikationsvorganges ZR wird dadurch erkannt, dass ein Latenzabdruck vorliegt und in einem vierten Verfahrensschritt 4 kein Identifikationsvorgang gestartet bzw. der Identifikationsvorgang abgewiesen.

Wird von der Auswerteeinheit AE allerdings festgestellt, dass der vorgegebene Grad an Übereinstimmung der beiden Bilder unterschritten oder nicht erreicht worden ist, so wird im dritten Verfahrensschritt das aktuell erfasste Bild des Fingerabdruckes über die Verbindung VB an die Mittel zum Durchführen des Identifikationsvorganges ZR weitergeleitet. Im vierten Verfahrensschritt 4 wird dann von den Mittel Durchführen des Identifikationsvorganges ZR der Identifikationsvorgang durchgeführt und bei entsprechender Identifikation des Fingerabdruckes z.B. die Nutzung der Anwendung, des Netzes, etc. dem jeweiligen Benutzer gestattet.

Der Grad an Übereinstimmung der beiden Bilder eines Fingerabdruckes, welcher von der Auswerteeinheit AE der Sensoreinheit SE beurteilt wird und der auch als Ähnlichkeitsschwelle bezeichnet werden kann, ergibt sich beispielsweise aus einem Vergleich der Lage/Position des jeweiligen Fingerabdruckes bzw. der entsprechenden Fingerabdruckmerkmale auf der Sensoreinheit SE. Bei einem Latenzabdruck ist davon auszugehen, dass dieser in Lage/Position kaum bis gar nicht vom zuletzt eingegebenen Fingerabdruck abweicht.

Allerdings ist es dabei wichtig, zu erkennen, wenn beispielsweise der Benutzer seinen Finger nur ruhig auf der Sensoreinheit SE liegen lässt, damit dies nicht fälschlich als Latenzabdruck gewertet wird. Daher kann z.B. nach einem erfolgten Identifikationsvorgang, wenn die Ähnlichkeitsschwelle bzw. der vorgegebene Grad an Übereinstimmung unterschritten worden ist, für eine vordefinierte Zeitdauer jeder Fingerabdruck von der Sensoreinheit SE aufgenommen und dann die Bilder von diesen Fingerabdrücken an die Mittel zur Durchführen des Identifikationsvorganges ZR weitergeleitet werden.

Alternativ zur Weiterleitung aller Bilder für eine vordefinierte Zeitdauer kann beispielsweise auch erst wieder dann ein Vorverarbeitungsschritt - entsprechend dem zweiten Verfahrensschritt 2 - durchgeführt werden, sobald ein Abheben des Fingers - d.h. eine so genannte Lücke bzw. "kein Finger auf der Sensoreinheit SE nach Vorhandensein eines Fingerabdrucks" - festgestellt worden ist. Bei dieser Vorgehensweise ist für die Durchführung bei der Speichereinheit SPE ein so genannter Ringbufferspeicher notwendig, damit auf mehrere vergangene Bilder von Fingerabdrücken zurückgegriffen werden kann.

## Patentansprüche

1. Verfahren zum Erkennen von Latenzabdrücken in einem biometrischen System (BIO SYS), bei welchem ein Benutzer zumindest für eine Eingabe einen Finger in Kontakt mit einer Sensoreinheit (SE) bringt (1), **dadurch gekennzeichnet, dass**
- in einem Vorverarbeitungsschritt vor einem Identifikationsvorgang von der Sensoreinheit (SE) ein aktuell erfasstes Bild eines Fingerabdruckes mit einem jeweils letztgültigen und in der Sensoreinheit (SE) gespeicherten Bild eines Fingerabdruckes verglichen wird (2),
- dass bei einem vorgegebenen Grad an Übereinstimmung der beiden Bilder Rückweisungsmaßnahmen veranlasst werden (3),
- und dass nur wenn dieser vorgegebene Grad an Übereinstimmung unterschritten wird, der vollständige Identifikationsvorgang durchgeführt wird (4).

2. Verfahren nach Anspruch 1, **dadurch gekennzeichnet, dass** als Rückweisungsmaßnahme kein Bild für den Identifikationsvorgang weitergeleitet wird (3).

3. Verfahren nach Anspruch 1, **dadurch gekennzeichnet, dass** als Rückweisungsmaßnahme ein vordefiniertes Bild für den Identifikationsvorgang weitergeleitet wird (3).

4. Verfahren nach einem der Ansprüche 1 bis 3, **dadurch gekennzeichnet, dass** nach Feststellen einer Unterschreitung des vorgegebenen Grades an Übereinstimmung zwischen dem aktuell erfasstes Bild des Fingerabdruckes und dem jeweils letztgültigen und in der Sensoreinheit (SE) gespeicherten Bild des Fingerabdruckes für eine vordefinierte Zeitdauer anforderungssynchron alle von der Sensoreinheit (SE) aufgenommenen Bilder von Fingerabdrücken weitergeleitet werden.

5. Verfahren nach einem der Ansprüche 1 bis 3, **dadurch gekennzeichnet, dass** nach Feststellen einer Unterschreitung des vorgegebenen Grades an Übereinstimmung zwischen dem aktuell erfasstes Bild des Fingerabdruckes und dem jeweils letztgültigen und in der Sensoreinheit (SE) gespeicherten Bild des Fingerabdruckes erst dann wieder der Vorverarbeitungsschritt vor einem Identifikationsvorgang von der Sensoreinheit (SE) durchgeführt wird, wenn ein Abheben des Fingers, insbesondere ein Leerbild nach Vorhandensein eines Fingerabdruckes, von der Sensoreinheit (SE) detektiert worden ist.

6. Verfahren nach einem der Ansprüche 1 bis 5, **dadurch gekennzeichnet, dass** das aktuell erfasste Bild eines Fingerabdruckes mit dem jeweils letztgültigen und in der Sensoreinheit (SE) gespeicherten Bild des Fingerabdruckes von der Sensoreinheit (SE) auf Bildbasis verglichen wird (2).

7. Verfahren nach einem der Ansprüche 1 bis 5, **dadurch gekennzeichnet, dass** das aktuell erfasste Bild eines Fingerabdruckes mit dem jeweils letztgültigen und in der Sensoreinheit (SE) gespeicherten Bild des Fingerabdruckes von der Sensoreinheit (SE) auf Merkmalsbasis verglichen wird (2).

8. Biometrisches System (BIO_SYS) zur Durchführung eines Verfahrens gemäß den Ansprüchen 1 bis 7, welches zumindest eine Sensoreinheit (SE) zum Eingeben von Fingerabdrücken und davon räumlich getrennte Mittel zum Durchführen eines Identifikationsvorganges (ZR) umfasst,
**dadurch gekennzeichnet, dass** die Sensoreinheit (SE) zumindest umfasst:
- eine Speichereinheit (SPE) zum Abspeichern des jeweils letztgültigen Bildes eines Fingerabdruckes
- und eine Auswerteeinheit (AE) zum Vergleichen des aktuell erfassten Bildes des Fingerabdruckes mit dem jeweils letztgültigen und gespeicherten Bild des Fingerabdruckes im Vorverarbeitungsschritt.

9. Biometrisches System (BIO_SYS) nach Anspruch 8, **dadurch gekennzeichnet, dass** die Speichereinheit (SPE) als nicht-flüchtiger Speicher ausgeführt ist.
